# EUROPÄISCHE PATENTSCHRIFT

(11) **EP 1 661 846 B1**
(45) Veröffentlichungstag und Bekanntmachung des Hinweises auf die Patenterteilung: **04.03.2009**
(21) Anmeldenummer: 05021472.5
(22) Anmeldetag: 30.09.2005
(51) Int. Cl.: B66F 3/18, F16H 25/24

(54) **Stelleinrichtung**
Actuator
Actionneur

(30) Priorität: 17.11.2004 AT 83104 U
(43) Veröffentlichungstag der Anmeldung: 31.05.2006
(73) Patentinhaber: Zimmermann, Jürgen, 6900 Bregenz (AT)
(72) Erfinder: Zimmermann, Jürgen, 6900 Bregenz (AT)
(74) Vertreter: Hofmann, Ralf U.

(56) Entgegenhaltungen:
- EP-A- 1 096 175
- EP-A2- 1 013 961
- WO-A-97/28388
- WO-A-98/43001
- DE-C- 65 139

## Beschreibung

Die Erfindung betrifft eine Stelleinrichtung zum Positionieren einer Last mit einer Spindel und einer auf der Spindel angeordneten Spindelmutter, wobei entweder die Spindelmutter in einem Getriebegehäuse drehbar und achsial unverschiebbar gelagert ist und durch Drehung der Spindelmutter die Spindel zum Positionieren der Last achsial verstellbar ist oder die Spindel im Getriebegehäuse drehbar und achsial unverschiebbar gelagert ist und durch Drehung der Spindel die Spindelmutter zum Positionieren der Last achsial verstellbar ist.

Derartige Stelleinrichtungen sind bekannt und werden auch als Spindelhubgetriebe, Spindelmuttergetriebe oder Stelltriebe bezeichnet. Solche Stelleinrichtungen dienen zur Positionierung von Lasten in Form von Bauteilen oder Baugruppen. Beispielsweise kommen diese Stelleinrichtungen bei Hubtischen, Hebeböcken, höhenverstellbaren Bühnen, Ventilen mit motorisch verstellbaren Ventilschiebern, motorisch verstellbaren Betonschalungen usw. zum Einsatz.

Neben Spindelmuttergetrieben, bei denen die Tragmutter drehbar in einem Getriebegehäuse gelagert ist und bei ihrer Drehung eine unverdrehbare Spindel in achsialer Richtung verstellt, sind auch Spindelmuttergetriebe bekannt, bei welchen die Spindel drehbar im Getriebegehäuse gelagert ist und durch Drehung der Spindel eine auf Ihrem Außengewinde angeordnete und gegen Verdrehung gesicherte Mutter in achsialer Richtung der Spindel verstellt wird.

Bei Anwendungen, bei welchen eine Schwenkbetätigung einer Last um eine Schwenkachse erfolgt, kommt es bei der Verschwenkung der Last auch um eine (kleinere) Verschwenkung des Getriebegehäuses der Stelleinrichtung um eine Schwenkachse. Um für solche Anwendungen eine verschwenkbare Lagerung des Getriebegehäuses zu ermöglichen, werden Adapterstücke bereitgestellt, an welche das Getriebegehäuse angeschraubt werden kann und welche Schwenklagerbuchsen oder Schwenklagerzapfen aufweisen. Mit diesen Schwenklagerbuchsen oder -zapfen des Adapterteils wirken Schwenklagerzapfen bzw. -buchsen zusammen, die an einem ortsfesten Teil angebracht sind, gegenüber welchem die Last um eine Schwenkachse zu verschwenken ist. Die Last ist weiters verschwenkbar mit der Spindel (im Falle einer achsial verstellbaren Spindel) oder der Spindelmutter (im Fall einer achsial verstellbaren Spindelmutter) verbunden. Auch eine verschwenkbare Lagerung des mit dem Getriebegehäuse verbundenen Adapterteils an der verschwenkbaren Last und eine verschwenkbare Lagerung der achsial verstellbaren Spindel bzw. achsial verstellbaren Spindelmutter an einem ortsfesten Tragteil kann vorgesehen sein. Nachteilig an dieser herkömmlichen Lösung sind die relativ hohen zusätzlichen Kosten für das mit dem Getriebegehäuse zu verbindende Adapterteil, über welches die Schwenklagerung hergestellt wird.

Die EP 1 096 175 A2 offenbart eine gattungsgemäße Stelleinrichtung bei der offen gelassen ist, wie die Schwenkzapfen im Getriebegehäuse gelagert sind.

Aufgabe der Erfindung ist es, eine verbesserte Stelleinrichtung der eingangs genannten Art bereitzustellen, bei der im Vergleich zu herkömmlichen Stelleinrichtungen eine Kosteneinsparung bei der Realisierung von Schwenkbetätigungen von Lasten erreicht wird. Erfindungsgemäß gelingt dies durch eine Stelleinrichtung mit den Merkmalen des Anspruchs 1.

Durch die Integration der Schwenklagerung in das Getriebegehäuse sind zur Ausbildung von Schwenkbetätigungen von Lasten keine zusätzlichen am Getriebegehäuse zu befestigenden Adapterteile erforderlich, wodurch eine kostengünstigere Stelleinrichtung für Schwenkbetätigungen ausgebildet wird.

Weitere Vorteile und Einzelheiten der Erfindung werden im Folgenden anhand der beiliegenden Zeichnung erläutert. In dieser zeigen:

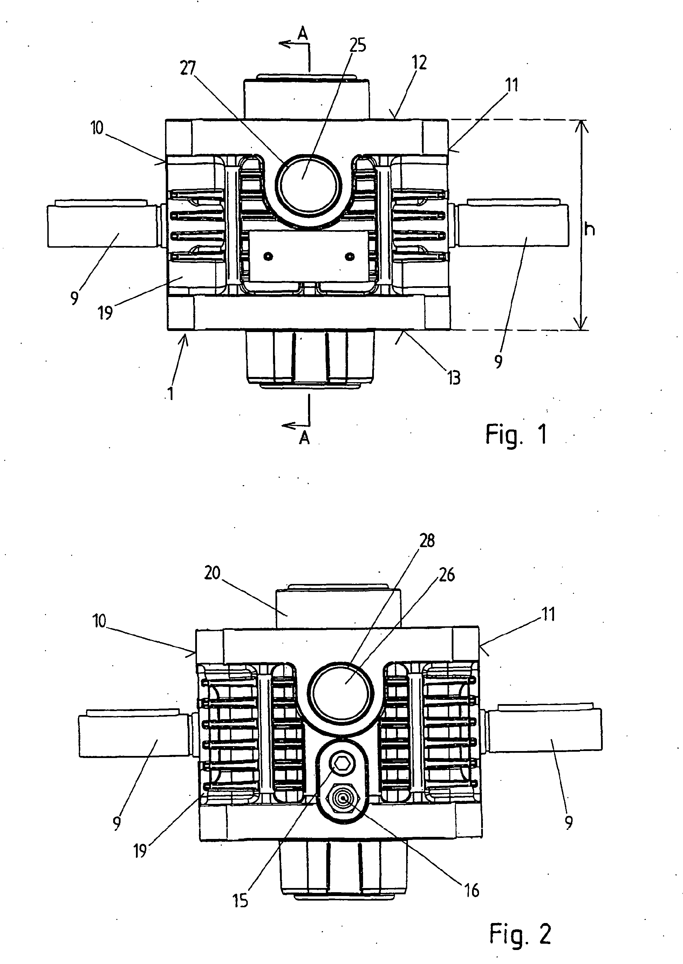

- die Fig. 1 und 2: Seitenansichten auf gegenüberliegende Seiten des Getriebegehäuses einer Stelleinrichtung gemäß einer Ausführungsform der Erfindung;

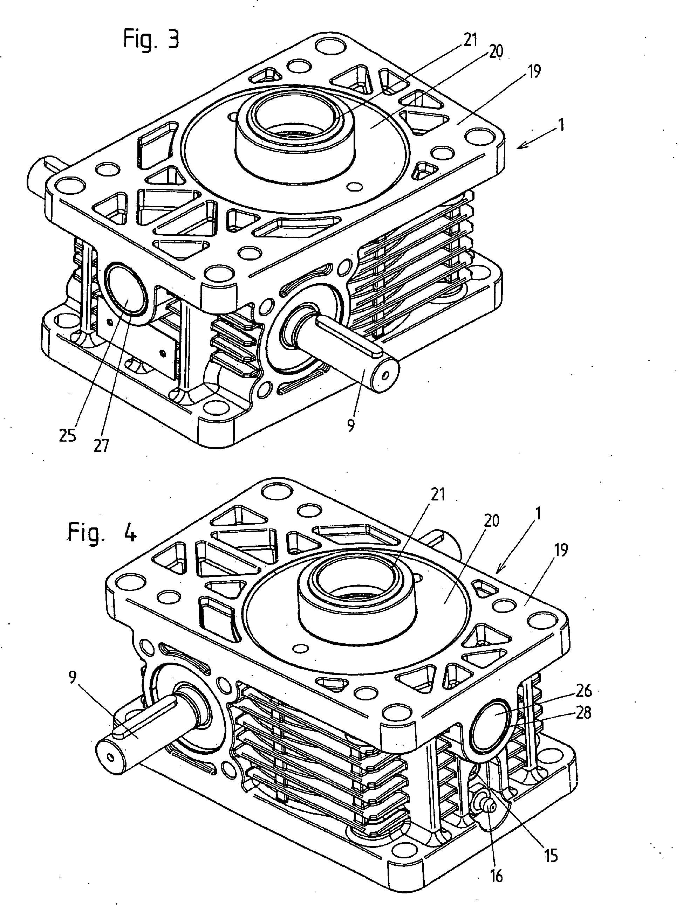

- die Fig. 3 und 4: Schrägsichten des Getriebegehäuses von Fig. 1 und 2 aus verschiedenen Blickwinkeln, jeweils von schräg oben;
- Fig. 5: eine Schrägsicht des Getriebegehäuses, wobei die Gleitlagerbuchsen nach Art einer Explosionsdarstellung aus den Sacklöchern des Getriebegehäuses herausgezogen;
- Fig. 6: einen Längsschnitt durch eine Stelleinrichtung gemäß diesem Ausführungsbeispiel der Erfindung (Schnittlinie A-A von Fig. 1), wobei die Spindel nur abschnittsweise dargestellt ist;
- Fig. 7: eine Schrägsicht der Stelleinrichtung gemäß dieser Ausführungsform der Erfindung in einer Anwendung zur Schwenkbetätigung eines Bauteils;
- Fig. 8: eine Schrägsicht einer Lagerlasche zur Schwenklagerung des Getriebegehäuses.

Beim in den Fig. dargestellten Ausführungsbeispiel der Erfindung ist im Getriebegehäuse 1 eine Spindelmutter 2 über Achsiallager 3, 4 drehbar und achsial unverschiebbar gelagert. Die Spindelmutter 2 ist mit ihrem Innengewinde auf dem Außengewinde einer Spindel 5 angeordnet, welche durch Drehung der Spindelmutter 2 achsial, d. h. in Richtung ihrer Längsachse 6 verstellbar ist. Das Außengewinde der Spindel 5 kann beispielsweise in Form eines Trapezgewindes ausgebildet sein.

Zur Drehung der Spindelmutter 2 besitzt diese eine Außenverzahnung 7, die mit der Verzahnung eines Antriebsrads 8 in Eingriff steht. Die Außenverzahnung 7 kann beispielsweise als Schneckenverzahnung und das Antriebsrad 8 als Schnecke ausgebildet sein. Das Antriebsrad 8 wird über eine Antriebswelle 9 angetrieben, welche im gezeigten Ausführungsbeispiel auf gegenüberliegenden Gehäuseseiten 10, 11 des Getriebegehäuses 1 aus diesem heraussteht. Die drehbare Lagerung des Antriebsrads 8 kann beispielsweise durch eine drehbare Lagerung der Antriebswelle 9 über beidseitig des Antriebsrads 8 angeordnete Radiallager erfolgen, die in den Fig. nicht dargestellt sind.

Die Spindel 5 ragt im Bereich von oberen und unteren Gehäuseseiten 12, 13 aus dem Getriebegehäuse 1 heraus.

Durch die Einfüllbohrung 14 kann nach Herausschrauben einer Verschlussschraube 15 ein Schmiermittel eingebracht werden. Durch den Schmiernippel 16 und die Schmierbohrung 17 kann ebenfalls ein (gleiches oder unterschiedliches) Schmiermittel eingebracht werden.

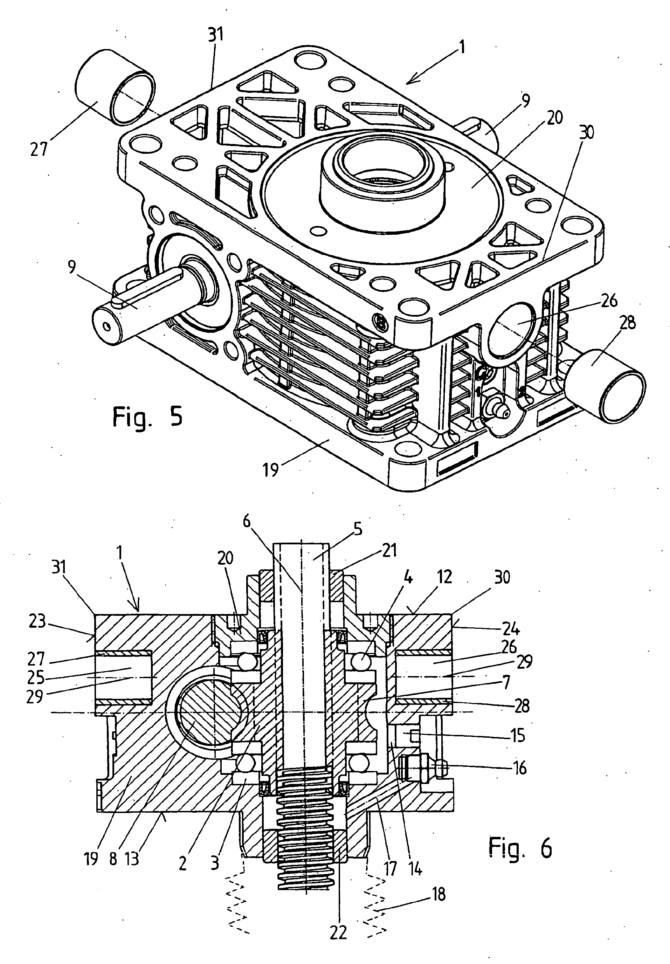

Der aus dem Getriebegehäuse 1 herausragende Abschnitt der Spindel 5, an dessen Ende die zu verstellende Last angebracht ist, kann von einem Well- bzw. Faltenbalg 18 umgeben sein, der in Fig. 6 nur strichliert dargestellt ist.

Das Getriebegehäuse 1 umfasst ein Gehäusebasisteil 19 und einen mit dem Gehäusebasisteil verschraubten Gehäusedeckel 20, durch den die Spindel 5 auf einer Gehäuseseite 12 aus dem Getriebegehäuse 1 herausgeführt ist. In die Austrittsöffnungen des Gehäusebasisteils 19 und des Gehäusedeckels 20 für die Spindel 5 sind Buchsen 21, 22 eingepresst. Im Normalbetrieb sind die Buchsen 21, 22 vom Außengewinde der Spindel 5 durch einen Spalt beabstandet. Falls eine seitliche Belastung auf die Spindel 5 wirkt, sodass diese gegen die Innenwand der Buchse 21 bzw. 22 gedrückt wird, dient die Buchse 21, 22 auch zur Radialführung der Spindel 5. Die Buchse 21, 22 besteht hierzu aus einem entsprechend gleitfähigen Material, vorzugsweise Bronze.

Das Gehäusebasisteil 19 ist als Metallgussteil ausgebildet. An gegenüberliegenden Gehäuseseiten 23, 24 sind Sacklöcher 25, 26 im Gehäusebasisteil 19 angeordnet, in welche rohrstückförmige Schwenklagerbuchsen (= Gleitbuchsen) 27, 28 eingepresst sind. Die Schwenklagerbuchsen 27, 28 dienen zur Aufnahme von Schwenkzapfen, um das Getriebegehäuse 1 zur Ausbildung eines Schwenktriebes verschwenkbar zu lagern. Die Schwenklagerbuchsen 27, 28 können beispielsweise in Form von bronzebeschichteten Stahlbuchsen ausgebildet sein. Die Achsen 29 der Schwenklagerbuchsen 27, 28 fluchten miteinander und stehen rechtwinklig zur Längsachse 6 der Spindel. Die Gehäuseseiten 23, 24, in denen die Sacklöcher 25, 26 mit den eingepressten Schwenklagerbuchsen 27, 28 angeordnet sind, stehen somit rechtwinklig zu den Gehäuseseiten 12, 13, die von der Spindel 5 durchsetzt werden.

Im gezeigten Ausführungsbeispiel stehen die Achsen 29 der Schwenklagerbuchsen 27, 28 weiters rechtwinklig zur Antriebswelle 9, wobei die Gehäuseseiten 23, 24, in denen die Sacklöcher 25, 26 mit den Schwenklagerbuchsen 27, 28 angeordnet sind, rechtwinklig zu den Gehäuseseiten 10, 11 stehen, die von der Antriebswelle 9 durchsetzt werden.

Günstig ist es weiters, wenn die Achsen 29 der Schwenklagerbuchsen 27, 28 um weniger als die Hälfte, vorzugsweise weniger als zwei Fünftel, der in achsialer Richtung der Spindel 5 gemessenen Höhe h des Getriebegehäuses 1 vom lastseitigen Rand 30, 31 der jeweiligen Gehäuseseite 23, 24, an der sie angeordnet sind, entfernt sind. Die Durchbiegung der Spindel 5 durch die auf sie wirkende Last wird dadurch möglichst gering gehalten.

Die Sacklöcher 25, 26 werden beim Gießen des Gehäusebasisteils 19 ausgebildet und in der Folge auf den genauen gewünschten Durchmesser aufgebohrt werden. In der Folge werden die Schwenklagerbuchsen 27, 28 eingepresst.

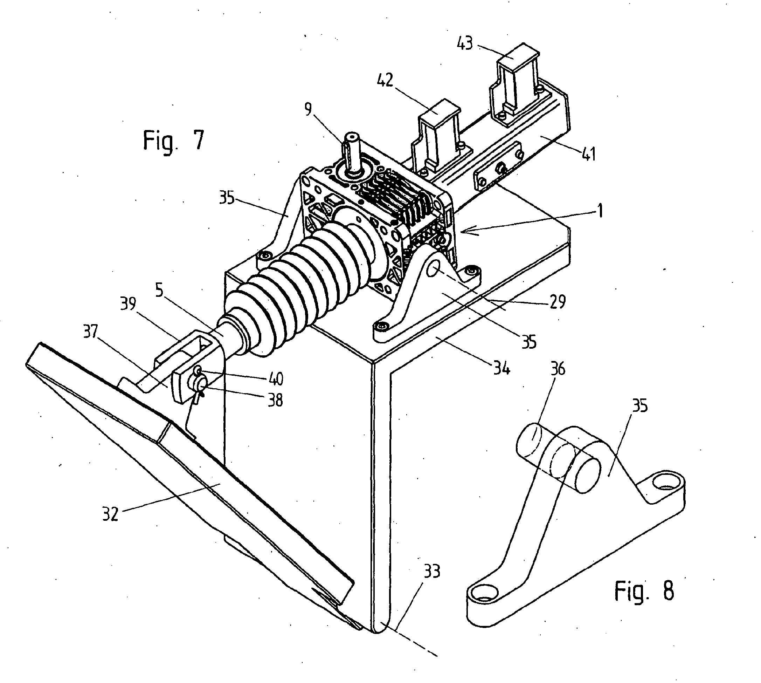

Ein Ausführungsbeispiel einer möglichen Anwendung einer Stelleinrichtung gemäß dieser Ausführungsform ist in Fig. 7 dargestellt. Eine Last 32 ist um eine Schwenkachse 33 verschwenkbar an einem ortsfesten Teil 34 gelagert. Am ortsfesten Teil 34 sind Lagerlaschen 35 angebracht, welche Schwenkzapfen 36 (vgl. Fig. 8) aufweisen. Die Schwenkzapfen 36 ragen in die an den gegenüberliegenden Gehäuseseiten 23, 24 in die Sacklöcher 25, 26 eingepressten Schwenklagerbuchsen 27, 28, wodurch das Getriebegehäuse 1 um die Achse 29 der Schwenklagerbuchsen 27, 28 verschwenkbar gelagert ist. An der Last 32 ist eine Lagerlasche 37 angebracht, die eine Bohrung aufweist, welche von einem Bolzen 38 durchsetzt wird, der durch Bohrungen in einer Gabel 39 ragt und von einem Splint 40 gesichert ist. Die Gabel 39 ist am Ende der Spindel 5 angebracht. Auf diese Weise ist die Last 32 verschwenkbar mit der Spindel 5 verbunden.

Der auf der anderen Seite aus dem Getriebegehäuse 1 ragende Abschnitt der Spindel 5 ragt in ein Vierkantrohr 41. Am Ende dieses Abschnitts der Spindel 5 kann ein Block (nicht sichtbar in Fig. 7) befestigt sein, der verschiebbar im Vierkantrohr 41 aber unverdrehbar gegenüber diesem gelagert ist, um eine Verdrehsicherung für die Spindel 5 auszubilden. Die Verdrehsicherung für die Spindel 5 kann auch durch die Befestigung an der Last 32 ausgebildet sein. Mit dem in das Vierkantrohr 41 ragenden Abschnitt der Spindel 25 wirken weiters Endschalter 42, 43 zusammen, die den Verschwenkwinkel für die Last 32 begrenzen.

Zum Verschwenken der Last 32 wird die Antriebswelle 9 von einem nicht dargestellten Antriebsmotor angetrieben, wodurch die Spindelmutter 2 vom Antriebsrad 8 gedreht wird und die Spindel 5 achsial verschoben wird. Bei der Verschwenkung der Last 32 um die Schwenkachse 33 verschwenkt sich auch das Getriebegehäuse 1 um die Achse 29 der Schwenklagerbuchse 27, 28. Weiters verschwenkt sich die Last 32 gegenüber der Spindel 5 um den Bolzen 38.

Unterschiedliche Modifikationen des gezeigten Ausführungsbeispiels sind denkbar und möglich, ohne den Bereich der Erfindung zu verlassen. So könnte beispielsweise das Gehäusebasisteil 19 auch mehrteilig aus mehreren miteinander verbundenen Metallgussteilen hergestellt sein. Der aufschraubbare Gehäusedeckel 20 könnte in diesem Fall auch entfallen. Andererseits könnten auch mehrere aufschraubbare Gehäusedeckel vorgesehen sein.

Im gezeigten Ausführungsbeispiel ist im Getriebegehäuse eine Spindelmutter 2 drehbar aber achsial unverschiebbar gelagert, um die gegen eine Verdrehung gesicherte Spindel achsial zu verstellen. Statt dessen könnte auch die Spindel im Getriebegehäuse verdrehbar und achsial unverschiebbar gelagert sein und mittels eines Antriebsrades, das mit einer Antriebswelle verbunden ist, gedreht werden. Normalerweise ragt die Spindel bei einer solchen Ausbildung nur an einer Seite des Gehäuses aus diesem heraus. In diesem Falle wird die auf dem Außengewinde der Spindel angeordnete Spindelmutter bei der Drehung der Spindel in achsialer Richtung der Spindel verstellt. Die Spindelmutter ist hierbei durch ihre Verbindung mit der zu verstellenden Last gegen eine Verdrehung gesichert.

### Legende zu den Hinweisziffern:

- 1: Getriebegehäuse
- 2: Spindelmutter
- 3: Achsiallager
- 4: Achsiallager
- 5: Spindel
- 6: Längsachse
- 7: Außenverzahnung
- 8: Antriebsrad
- 9: Antriebswelle
- 10: Gehäuseseite
- 11: Gehäuseseite
- 12: Gehäuseseite
- 13: Gehäuseseite
- 14: Einfüllbohrung
- 15: Verschlussschraube
- 16: Schmiernippel
- 17: Schmierbohrung
- 18: Faltenbalg
- 19: Gehäusebasisteil
- 20: Gehäusedeckel
- 21: Buchse
- 22: Buchse

- 23: Gehäuseseite
- 24: Gehäuseseite
- 25: Sackloch
- 26: Sackloch
- 27: Schwenklagerbuchse
- 28: Schwenklagerbuchse
- 29: Achse
- 30: Rand
- 31: Rand
- 32: Last
- 33: Schwenkachse
- 34: Teil
- 35: Lagerlasche
- 36: Schwenkzapfen
- 37: Lagerlasche
- 38: Bolzen
- 39: Gabel
- 40: Splint
- 41: Vierkantrohr
- 42: Endschalter
- 43: Endschalter

## Patentansprüche

1. Stelleinrichtung zum Positionieren einer Last (32) mit einer Spindel (5) und einer auf der Spindel (5) angeordneten Spindelmutter (2), wobei entweder die Spindelmutter (2) in einem Getriebegehäuse (1) drehbar und achsial unverschiebbar gelagert ist und durch Drehung der Spindelmutter (2) die Spindel (5) zum Positionieren der Last (32) achsial verstellbar ist oder die Spindel (5) im Getriebegehäuse (1) drehbar und achsial unverschiebbar gelagert ist und durch Drehung der Spindel (5) die Spindelmutter (2) zum Positionieren der Last (32) achsial verstellbar ist, **dadurch gekennzeichnet, dass** das Getriebegehäuse (1) auf zwei gegenüberliegenden Gehäuseseiten (23, 24) Sacklöcher (25; 26) aufweist, in die Schwenklagerbuchsen (27, 28) zur Aufnahme von Schwenkzapfen (36) eingepresst sind.

2. Stelleinrichtung nach Anspruch 1, **dadurch gekennzeichnet, dass** das Getriebegehäuse ein, vorzugsweise einstückig ausgebildetes, Gehäusebasisteil (19) aufweist, welches ein Metallgussteil ist und in welchem die Sacklöcher (25, 26) mit den eingepressten Schwenklagerbuchsen (27, 28) angeordnet sind.

3. Stelleinrichtung nach Anspruch 1 oder Anspruch 2, **dadurch gekennzeichnet, dass** die Schwenklagerbuchsen (27, 28) bronzebeschichtete Stahlbuchsen sind.

4. Stelleinrichtung nach einem der Ansprüche 1 bis 3, **dadurch gekennzeichnet, dass** die Schwenklagerbuchsen (27, 28) rohrstückförmig ausgebildet sind.

5. Stelleinrichtung nach einem der Ansprüche 1 bis 4, **dadurch gekennzeichnet, dass** die Achsen (29) der Schwenklagerbuchsen (27, 28) rechtwinklig zur Längsachse (6) der Spindel (5) stehen.

6. Stelleinrichtung nach einem der Ansprüche 1 bis 5, **dadurch gekennzeichnet, dass** die Achsen (29) der Schwenklagerbuchsen (27, 28) rechtwinklig zu einer Antriebswelle (9) zum Antrieb der Stelleinrichtung stehen.

7. Stelleinrichtung nach einem der Ansprüche 1 bis 6, **dadurch gekennzeichnet, dass** die Gehäuseseiten (23, 24), in denen die Sacklöcher (25, 26) mit den eingepressten Schwenklagerbuchsen (27, 28) angeordnet sind, rechtwinklig zur mindestens einen Gehäuseseite (12, 13) stehen, auf welcher die Spindel (5) aus dem Getriebegehäuse (1) austritt.

8. Stelleinrichtung nach einem der Ansprüche 1 bis 7, **dadurch gekennzeichnet, dass** die Gehäuseseiten (23, 24), in denen die Sacklöcher (25, 26) mit den eingepressten Schwenklagerbuchsen (27, 28) angeordnet sind, rechtwinklig zur mindestens einen Gehäuseseite (10, 11) stehen, welche von einer Antriebswelle (9) zum Antrieb der Stelleinrichtung durchsetzt wird.

9. Stelleinrichtung nach einem der Ansprüche 1 bis 8, **dadurch gekennzeichnet, dass** die Achsen (29) der in die Sacklöcher (25, 26) eingesetzten Schwenklagerbuchsen (27, 28) miteinander fluchten.

10. Stelleinrichtung nach einem der Ansprüche 1 bis 9, **dadurch gekennzeichnet, dass** die Achsen (29) der in die Sacklöcher (25, 26) eingesetzten Schwenklagerbuchsen (27, 28) um weniger als die Hälfte, vorzugsweise weniger als zwei Fünftel der in achsialer Richtung der Spindel (5) gemessenen Höhe (h) des Getriebegehäuses (1) vom lastseitigen Rand (30, 31) der jeweiligen Gehäuseseite (23, 24), an der sie angeordnet sind, entfernt sind.

## Claims

1. An adjusting device for positioning a load (32), with a spindle (5) and a spindle nut (2) arranged on the spindle (5), wherein either the spindle nut (2) is rotatably and axially non-displaceably mounted in a transmission casing (1) and, by rotation of the spindle nut (2), the spindle (5) is axially adjustable for positioning the load (32), or the spindle (5) is rotatably and axially non-displaceably mounted in the transmission casing (1) and, by rotation of the spindle (5), the spindle nut (2) is axially adjustable for positioning the load (32), **characterised in that** on two opposing casing sides (23, 24) the transmission casing (1) has blind holes (25, 26) into which swivel bearing bushes (27, 28) for receiving swivel pins (36) are pressed.

2. An adjusting device according to claim 1, **characterised in that** the transmission casing (1) has a casing base part (19), preferably formed in one piece, which is a metal casting and in which the blind holes (25, 26) with the pressed-in swivel bearing bushes (27, 28) are arranged.

3. An adjusting device according to claim 1 or claim 2, **characterised in that** the swivel bearing bushes (27, 28) are bronze-coated steel bushes.

4. An adjusting device according to any one of claims 1 to 3, **characterised in that** the swivel bearing bushes (27, 28) are formed as tubular parts.

5. An adjusting device according to any one of claims 1 to 4, **characterised in that** the axes (29) of the swivel bearing bushes (27, 28) extend at right angles to the longitudinal axis (6) of the spindle (5).

6. An adjusting device according to any one of claims 1 to 5, **characterised in that** the axes (29) of the swivel bearing bushes (27, 28) extend at right angles to a drive shaft (9) for driving the adjusting device.

7. An adjusting device according to any one of claims 1 to 6, **characterised in that** the casing sides (23, 24), in which the blind holes (25, 26) with the pressed-in swivel bearing bushes (27, 28) are disposed, are arranged at right angles to at least one casing side (12, 13) on which the spindle (5) issues from the transmission casing (1).

8. An adjusting device according to any one of claims 1 to 7, **characterised in that** the casing sides (23, 24), in which the blind holes (25, 26) with the pressed-in swivel bearing bushes (27, 28) are disposed, are arranged at right angles to at least one casing side (10, 11) through which a drive shaft (9) for driving the adjusting device extends.

9. An adjusting device according to any one of claims 1 to 8, **characterised in that** the axes (29) of the swivel bearing bushes (27, 28) inserted into the blind holes (25, 26) are aligned with one another.

10. An adjusting device according to any one of claims 1 to 9, **characterised in that** the axes (29) of the swivel bearing bushes (27, 28) inserted into the blind holes (25, 26) are spaced by less than half, preferably less than two fifths, of the height (h) of the transmission casing (1), measured in the axial direction of the spindle (5), from the load-side edge (30, 31) of the respective casing side (23, 24) on which they are arranged.

## Revendications

1. Actionneur pour positionner une charge (32) à l'aide d'une broche (5) et d'un écrou de broche (2) installé sur la broche (5), et
soit l'écrou (2) est monté à rotation, de façon axialement bloquée, dans un boîtier de transmission (1) pour déplacer axialement la broche (5) afin de positionner la charge (32) par rotation de l'écrou (2),
soit la broche (5) est bloquée en rotation et en coulissement axial dans le boîtier de transmission (1) et la rotation de la broche (5) déplace axialement l'écrou (2) pour positionner la charge (32),
**caractérisé en ce que**
sur deux faces opposées (23, 24) le boîtier de transmission (1) comporte des trous borgnes (25, 26) dans lesquels sont enfoncées des douilles de palier de pivotement (27, 28) pour recevoir des tourillons de pivotement (36).

2. Actionneur selon la revendication 1,
**caractérisé en ce que**
le boîtier de transmission comporte une partie de base de boîtier (19) de préférence réalisée en une seule pièce, qui est une pièce de fonte de métal comportant les perçages borgnes (25, 26) avec les douilles de palier de pivotement (27, 28) enfoncées.

3. Actionneur selon la revendication 1 ou la revendication 2,
**caractérisé en ce que**
les douilles de palier de pivotement (27, 28) sont des douilles en acier revêtu de bronze.

4. Actionneur selon l'une des revendications 1 à 3,
**caractérisé en ce que**
les douilles de palier de pivotement (27, 28) sont réalisées sous la forme d'éléments tubulaires.

5. Actionneur selon l'une des revendications 1 à 4,
**caractérisé en ce que**
les axes (29) des douilles de palier de pivotement (27, 28) sont perpendiculaires à l'axe longitudinal (6) de la broche (5).

6. Actionneur selon l'une des revendications 1 à 5,
**caractérisé en ce que**
les axes (29) des douilles de palier de pivotement (27, 28) sont perpendiculaires à l'arbre d'entraînement (9) servant à entraîner l'actionneur.

7. Actionneur selon l'une des revendications 1 à 6,
**caractérisé en ce que**
les côtés (23, 24) du boîtier munis des perçages borgnes (25, 26) avec les douilles de palier de pivotement (27, 28) enfoncées, sont perpendiculaires à au moins un côté (12, 13) du boîtier par lequel la broche (5) sort du boîtier de transmission (1).

8. Actionneur selon l'une des revendications 1 à 7,
**caractérisé en ce que**
les parties de boîtier (23, 24) munies des perçages borgnes (25, 26) avec les douilles de palier enfoncées (27, 28) sont perpendiculaires à au moins un côté (10, 11) du boîtier traversé par l'arbre d'entraînement (9) pour l'entrainement de l'actionneur.

9. Actionneur selon l'une des revendications 1 à 8,
**caractérisé en ce que**
les axes (29) des douilles de palier de pivotement (27, 28) logées dans les perçages borgnes (25, 26) sont alignés.

10. Actionneur selon l'une des revendications 1 à 9,
**caractérisé en ce que**
les axes (29) des douilles de palier de pivotement (27, 28) logées dans les trous borgnes (25, 26) sont distants d'au moins la moitié et, de préférence, de moins de 2/5 de la hauteur (h) du boîtier de transmission (1), mesurée dans la direction axiale de la broche (5), par rapport au bord (30, 31) côté charge de la partie respective (23, 24) du boîtier qui comporte ces perçages borgnes.
